(19) Europäisches Patentamt
European Patent Office
Office européen des brevets

(11) Numéro de publication: **0 223 624**
**B1**

(12) **FASCICULE DE BREVET EUROPEEN**

(45) Date de publication du fascicule du brevet: **22.11.90**

(51) Int. Cl.$^5$: **A 01 G 31/00**, A 01 N 65/00, C 05 C 9/00

(21) Numéro de dépôt: **86401950.0**

(22) Date de dépôt: **05.09.86**

(54) **Procédé pour la culture de la jacinthe d'eau, plantes obtenues et leurs utilisations.**

(30) Priorité: **23.09.85 FR 8514055**

(43) Date de publication de la demande:
**27.05.87 Bulletin 87/22**

(45) Mention de la délivrance du brevet:
**22.11.90 Bulletin 90/47**

(84) Etats contractants désignés:
**AT BE CH DE FR GB IT LI LU NL SE**

(56) Documents cités:
**GB-A-2 032 746**
**US-A-2 949 700**
**US-A-3 402 506**
**US-A-4 297 130**

(73) Titulaire: **SPIE BATIGNOLLES**
**Tour Anjou 33 Quai de Dion-Bouton**
**F-92814 Puteaux (FR)**

(72) Inventeur: **Brochier, José**
**14 rue du Château**
**F-34160 Castries (FR)**

(74) Mandataire: **Bouju, André et al**
**Cabinet Bouju 38 avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 223 624 B1

**Description**

La présente invention concerne un procédé pour la culture hydroponique de la jacinthe d'eau (Eichhornia crassipes).

L'invention vise également la jacinthe d'eau obtenue selon le procédé précité, ainsi que le jus extrait de cette jacinthe d'eau et les applications de celui-ci, notamment en tant que biostimulant pour la croissance des plantes.

On sait que la jacinthe d'eau est une plante aquatique dont la croissance est extrêmement rapide lorsqu'elle est placée dans des conditions ambiantes favorables.

La demanderesse a mis au point un procédé et une installation qui sont décrits dans la demande de brevet français n°. 2 559 639 du 17 février 1984 pour réaliser la culture de la jacinthe d'eau dans des conditions optimales en ce qui concerne le rendement végétatif.

Il a été constaté que la jacinthe d'eau était capable d'absorber lors de sa croissance, de grandes quantités d'azote et d'éléments minéraux utiles—ou non—à son métabolisme, contenus dans l'eau dans laquelle elle est cultivée.

L'azote absorbé est transformé notamment en protéines. Ainsi, selon la teneur en azote de l'eau dans laquelle la jacinthe d'eau se développe, sa teneur en protéines varie entre 6 et 22% en poids, de la matière sèche.

Certains des éléments minéraux absorbés par la jacinthe d'eau sont transformés en composés chimiques, tels que par exemple des xantophylles ou des carotènes dont la teneur dépend de la concentration en fer de l'eau dans laquelle croît la jacinthe d'eau. Lorsque celle-ci croît naturellement, la teneur en xantophylles ne dépasse pas 500 ppm et celle en carotènes n'excède pas 20 ppm.

Cette propriété que possède la jacinthe d'eau de fixer dans ses tissus des minéraux, a incité des chercheurs à utiliser cette plante pour purifier les eaux chargées d'éléments minéraux indésirables.

D'autres chercheurs sont essayé d'augmenter la teneur en protéines de la jacinthe d'eau en ajoutant à l'eau dans laquelle est cultivée cette plante, un composé azoté formant dans cette eau des ions ammonium ($NH_4^+$). Cependant, ce procédé connu s'il permet d'obtenir une jacinthe d'eau enrichie en protéines par rapport à celle obtenue naturellement, pénalise fortement la productivité.

L'un des buts de la présente invention est de proposer un procédé pour la culture de la jacinthe d'eau, qui permette d'obtenir une plante très fortement enrichie en matière azotée, notamment sous forme de protéines, avec une productivité élevée.

L'invention concerne ainsi un procédé dans lequel on cultive la jacinthe d'eau dans une solution aqueuse nutritive contenant au moins un composé azoté ainsi que des éléments tels que P, K, Ca, Mg, S et Fe et dans lequel on forme le composé azoté en ajoutant de l'urée.

L'urée dont la formule chimique est $CO(NH_2)2$ se décompose sous l'action des microorganismes formés naturellement dans la solution aqueuse nutritive de la façon suivante:

$$CO(NH_2)2—NH_4^+(\text{ammonium})—NO_3^-(\text{nitrate})$$

La demanderesse a constaté que la jacinthe d'eau était capable d'absorber efficacement l'azote sous les trois formes ci-dessus, à savoir urée, ammonium et nitrate et qu'il était important pour obtenir une vitesse de croissance élevée de la plante et une forte teneur en protéines de celle-ci que les trois formes ci-dessus soient maintenues présentes en permanence.

Suivant l'invention le procédé de culture hydroponique de la jacinthe d'eau est caractérisé en ce que l'on ajuste l'apport en urée de façon à maintenir un équilibre sensiblement stable entre l'urée et ses produits de décomposition sous l'action des microorganismes contenus dans la solution nutritive à savoir $NH_4^+$ et $NO_4^-$, ces agents nutritifs étant mis au contact de la jacinthe et notamment de ses racines.

Selon une version préférée de l'invention, on ajuste l'apport en urée de façon à maintenir des proportions sensiblement égales en urée, et en ions $NH_4^+$ et $NO_3^-$ par rapport à l'azote total de la solution.

On obtient ainsi la meilleure vitesse de croissance de la plante et sa teneur en protéines la plus élevée.

Les conditions ambiantes sont également optimalisées en maintenant le pH de la solution nutritive à une valeur sensiblement comprise entre 5 et 7 et de préférence à une valeur égale à 6,5.

L'expérience a d'ailleurs montré que lorsque les concentrations en urée, en $NH_4^+$ et en $NO_3$-sont égales, ce qui suppose que la vitesse d'apport en urée soit égale à sa vitesse de décomposition en $NH_4^+$ et $NO_3^-$, le pH de la solution nutritive est maintenu à une valeur sensiblement constante et égale à 6,5, ce qui est favorable. On peut expliquer ce fait ainsi: l'absorption du $NH_4^+$ par la plante provoque une acidification de la solution nutritive tandis que l'absorption du $NO_3^-$ provoque une basification.

La concentration en azote sous les trois formes précitées dans la solution nutritive n'est pas très critique. Cependant, il est préférable de maintenir cette concentration à une valeur comprise entre 100 et 1 000 ppm.

Selon une version particulière de l'invention, on ajuste la teneur en Fe de la solution à une valeur comprise entre quelques ppm et quelques dizaines de ppm de façon à enrichir la jacinthe d'eau en xantophylles et carotènes.

On donne ci-après à titre d'exemple, non limitatif, la composition en milliéquivalent-gramme par litre d'une solution nutritive utilisée dans le procédé selon l'invention

| | |
|---|---|
| $N(NO_3^-)$ | 7,14 |
| $N(NH_4^+)$ | 7,4 |
| $NCO(NH_2)2$ | 7,4 |
| P | 4,02 |
| K | 3,97 |
| Mg | 3,96 |
| $S(SO_4^-)$ | 2,61 |
| $Cl^-$ | 2,25 |
| $Na^+$ | 2,13 |
| $Ca^-$ | 3,94 |

+oligo-éléments (traces).

Aux dessins annexés:

la figure 1 est un diagramme relatif à la solution nutritive;

les figures 2a à 2d sont des schémas montrant la procédure utilisée pour tester l'activité bio-stimulante du jus de jacinthe;

les figures 3a à 3c sont des résultats d'essais sur la tomate.

La figure 1 des dessins annexés est un diagramme montrant l'évolution en fonction du temps *t* en jours du pH de la solution nutritive (voir courbe A) et de la répartition C en % de l'azote sous forme d'urée (courbe B), de $NH_4^+$ (courbe C) et de $NO_3^-$ (courbe D).

Dans l'exemple illustré par cette figure, de l'urée a été ajoutée périodiquement pratiquement tous les jours pour maintenir la teneur en azote de la solution à une valeur à peu près constante, aux environs de 400 ppm.

Sur la figure 1, on voit également que le pH reste à peu près constant entre 6 et 7 pendant toute la durée de l'essai.

On obtient grâce au procédé conforme à l'invention, une jacinthe d'eau renfermant de façon inattendue une teneur en protéines nettement plus importante que les plantes cultivées naturellement. En effet, la teneur en protéines de celles-ci ne dépasse pas 22% de la matière sèche lorsqu'elles croissent naturellement ou selon les procédé connus.

Dans les meilleures conditions exposées ci-dessus, la jacinthe d'eau obtenue renferme:

une teneur en matières azotées totales, notamment protéines, comprise entre 35 et 45% (exprimée en % d'azote élémentaire×6,25).

Compte tenu de l'écart très significatif des teneurs en protéines entre la jacinthe d'eau cultivée selon l'invention et les plantes naturelles ou celles cultivées selon les procédés connus, on peut considérer que la jacinthe d'eau obtenue par la culture hydroponique particulière selon l'invention, dont la constitution est modifiée de manière importante, constitue un produit industriel nouveau.

Par ailleurs, la productivité en jacinthe d'eau atteint 30 à 80 g en matière sèche, par m2 de surface cultivée et par jour suivant l'intensité du rayonnement solaire.

La jacinthe d'eau ainsi obtenue est fortement enrichie en protéiens et constitue un aliment à la fois excellent et économique notamment pour les animaux, pouvant remplacer avantageusement d'autres aliments protéiques tels que le soja.

En ajoutant un composé de fer soluble dans l'eau de la solution nutritive tel que du sulfate de fer ou du fer sous forme de chelate, on peut obtenir grâce à l'invention, une jacinthe d'eau renfermant complémentairement entre 500 et 1500 ppm de xantophylles et entre 20 et 500 ppm de carotènes.

L'invention permet donc de réaliser d'une manière économique la synthèse de xantophylles et de carotènes utilisables dans diverses applications de la biochimie ou de la pharmacie.

Une application importante et préférée de l'invention est l'utilisation du jus obtenu par pressage d'au moins une partie de la jacinthe d'eau produite conformément au procédé selon l'invention, comme biostimulant de la croissance des plantes et en particulier comme accélérateur de la vitesse de germination des graines cultivables.

Conformément à l'invention, il a été en effet constaté de façon surprenante que ce jus de jacinthe présentait une action efficace sur la vitesse de croissance et la productivité de plantes, telles que les plantes herbacées, les plantes à racines et tubercules, les arbustes et les fleurs.

Ce just contient des composés azotés, tels que protéines, acides aminés, peptides, des vitamines, des hormones végétales, telles que les gibberelines, les auxines et les cytokinines, des pigments tels que les xantophylles et les carotènes et des éléments minéraux tels que P, K, Ca, Mg, S, Cu, Zn, B, Mo, Mn.

Etant donné que le procédé conforme à l'invention permet d'enrichir considérablement la jacinthe d'eau en matière azotée et que le jus extrait de cette jacinthe présente une action biostimulante élevée, cette forte teneur en matière azotée, combinée avec la présence de vitamines et d'éléments minéraux favorise l'action biostimulante du jus.

Le jus de jacinthe peut être obtenu par pressage de l'ensemble de la plante ou seulement des feuilles ou des racines et des tiges.

Dans l'utilisation, comme biostimulant de la croissance des plantes, il est préférable d'utiliser le jus des racines et des tiges, car les feuilles permettent d'obtenir d'une façon économique un concentré de protéines directement utilisable dans d'autres applications, telles que l'alimentation, notamment du bétail.

De préférence, le jus est réalisé par broyage et pressage. Après broyage et pressage de la plante, le jus est filtré, éventuellement par centrifugation pour le débarrasser de toute particule solide en suspension, puis il est aussitôt stabilisé par ajout par exemple de quelques % de sulfate de magnésium.

Le jus obtenu après filtration et avant stabilisation chimique, renferme entre 1 et 2% en poids de matière sèche, constituée par le mélange des composés dont la liste à été mentionnée plus haut.

La composition minérale de ce jus est à titre d'exemple la suivante:

| | |
|---|---|
| $Ca^{++}$ | 140 à 250 mg/l |
| $Mg^{++}$ | 70 à 150 mg/l |
| $K^{+}$ | 2 000 à 2 500 mg/l |
| $Na^{+}$ | 150 à 200 mg/l |
| $Cl^{-}$ | 1 000 à 2 600 mg/l |
| S (sous forme de $SO_4^{-}$) | 200 à 500 mg/l |
| N (sous forme de $NH_4^{+}$) | 200 à 400 mg/l |
| N (sous forme de $NO_3^{-}$) | 100 à 200 mg/l |
| P | 400 à 500 mg/l |
| Fe | 1 à 5 mg/l. |

Cette composition varie légèrement, suivant que le jus est extrait de la plante enrichie, ou seulement des racines et des tiges ou des feuilles.

Bien entendu, cette composition varie également en fonction de la composition en matière azotée et en éléments minéraux de la solution nutritive utilisée pour cultiver la jacinthe d'eau.

En vue du stockage et du transport du jus de jacinthe, l'invention prévoir soit de stabiliser le jus tel quel par addition d'un sel (ex: sulfate de magnésium) soit de concentrer au préalable ce jus par évaporation sans altérer le produit (à pression atmosphérique ou sous vide partiel). Le jus peut être concentré environ 20 fois soit 5 l pour 100 l de jus initial. Le jus concentré est d'une conservation plus facile, les composés minéraux présents dans le jus assurant une stabilisation permettant un stockage de longue durée.

En vue de son utilisation comme stimulateur de croissance des plantes, un jus de jacinthe d'eau, non préalablement concentré et renfermant initialement 1 à 2% de matière sèche, est dilué à raison de 5 à 30 litres d'eau/litres de jus.

Ce jus stabilisé et dilué est pulvérisé sur les plantes cultivées à raison de 300 à 1 500 l par hectare de culture.

On donne ci-après deux exemples d'expérimentation par pulvérisation du jus de jacinthe sur la culture de plantes. Ces expérimentations effectuées sous la direction du Professeur Pierre Grignac (Chaire de phytotechnie Ecole Nationale Supérieure Agronomique de Montpellier) mettent en évidence le rôle stimulateur de croissance du jus appliqué par pulvérisation foliaire.

Le jus utilisé dans ces exemples était obtenu par broyage et pressage des racines et de tiges de jacinthes d'eau cultivées dans une installation conforme à celle décrite dans la demande de brevet français n°. 2 559 639 du 17 février 1984 au nom de la demanderesse. La solution nutritive dans cette installation avait fait l'objet d'apports quotidiens d'azote sous forme d'urée, conformément au procédé selon l'invention.

Exemple 1:

Expérimentation du jus sur pommes de terre (Essai effectué en champ clos et d'accès interdit)

Caractéristiques de la culture:

Variété Claustar, semence de calibre minimum, classe A, origine Bretagne, plant prégermé.

Précédent cultural: pois suivis de laitues d'hiver détruites par le froid en janvier et enterrées par la boue.

Préparation du sol: labour suiv de herse rotative

Fumure: 150 kg $P_2O_5$, $K_2O$ au labour

150 kg N=100 à la plantation, 50 au premier binage

Plantation: le 2 mars écartement: 65 cm—30 cm

levée: 25—30 mars: binages 15 avril—10 mai

Irrigation par de l'eau: 8 mai, 22 mai, 11 juin, apport 180 mm.

Les pommes de terre ont été pulvérisées par du jus de jacinthe conforme à l'invention, dilué 5 fois par de l'eau.

Un lot A de pommes de terre a été pulvérisé par 500 l de jus diluié par hectare.

Un lot B de pommes de terre a été pulvérisé à raison de 1 000 l de jus dilué par hectare,

Un lot C de pommes de terre a été pulvérisé à raison de 1 500 l de jus dilué par hectare,

Un lot T (témoin) a été pulvérisé par 1 000 l d'eau pure (sans jus de jacinthe).

Deux pulvérisations ont été effectuées, contenant chacune la moitié de la dose, à savoir:

le 20 avril: au stade 4—5 feuilles

le 13 mai: au début d'apparition des boutons floraux.

Resultats: Récolte du 30 mai

| | Total (T/ha) | Rendement (en T/ha) Commercial* | Grenaille (<40 mm) | Nombre de tubercules par plante (>40 mm) |
|---|---|---|---|---|
| T | 28,8a | 20,5a | 8,3a | 4,8a |
| A | 31,8b | 24,2b | 7,6a | 4,9a |
| B | 34,5c | 28,3c | 6,2b | 5,3a |
| C | 34,8c | 29,8c | 5,0c | 5,5a |

* Commercial veut dire: pommes de terre commercialisables.

La lettre a désigne un résultat qui n'est pas significativement différent par rapport au traitement témoin T.

La lettre b désigne un résultat amélioré par rapport au traitement témoin.

La lettre c désigne un résultat nettement amélioré par rapport au traitement témoin.

Ces résultats montrent que la pulvérisation de jus de jacinthe conduit à un meilleur grossissement des tubercules de pommes de terre.

Récolte du 16 juin

| | Total | Rendement (en T/ha) Commercial | Grenaille (<40 mm) | Nombre de tubercules par plante (>40 mm) |
|---|---|---|---|---|
| T | 32,4a | 28,0a | 4,4 | 5,2a |
| A | 34,8b | 31,4b | 3,4a | 5,8a |
| B | 37,4c | 34,2c | 3,2a | 6,0a |
| C | 37,5c | 34,3c | 3,2a | 6,1a |

Ce résultat montre que le nombre de tubercules n'est pas affecté par le traitement selon l'invention et celui-ci se traduit par une meilleure migration des réerves, d'où des tubercules plus gros.

Récolte du 1er juillet

| | Total | Rendement (en T/ha) commercial | Grenaille (<40 mm) | Nombre de tubercules par plantes (>40 mm) |
|---|---|---|---|---|
| T | 38,5a | 35,5a | 3,0a | 5,4a |
| A | 41,6b | 38,7b | 2,9a | 6,0b |
| B | 44,9c | 42,5c | 2,4a | 6,3b |
| C | 45,2c | 42,7c | 2,5a | 6,4b |

Ce résultat montre qu'à la maturité on constate également une amélioration du rendement, dû en grande partie à une augmentation du poids individuel des tubercules.

Analyses: teneur en matières sèches

| | Récolte du 30 mai | Récolte du 16 juin | Récolte du 1er juillet |
|---|---|---|---|
| T | 18,5 | 22,0 | 24,5 |
| A | 18,0 | 22,0 | 24,5 |
| B | 17,5 | 21,5 | 24,0 |
| C | 17,5 | 21,0 | 24,0 |

teneur en glucides (g) et protéines (p)

| | Récolte du 30 mai | | Récolte du 16 juin | | Récolte du 1er juillet | |
|---|---|---|---|---|---|---|
| | g | p | g | p | g | p |
| T | 14,0 | 3,5 | 17,5 | 3,2 | 19,0 | 3,2 |
| A | 13,5 | 3,5 | 17,5 | 3,1 | 19,1 | 3,2 |
| B | 13,5 | 3,5 | 17,0 | 3,0 | 19,1 | 3,3 |
| C | 13,5 | 3,8 | 17,0 | 3,1 | 19,1 | 3,3 |

Par conséquent, le traitement selon l'invention ne perturbe pas la composition des tubercules.

On note un certain retard dans la végétation qui entraîne une teneur en eau légèrement supérieure dans les deux premières récoltes.

On constate par ailleurs que le nombre de ramifications des tiges est plus important et la hauteur des tiges et de la surface foliaire sont augmentées.

En conclusion, deux pulvérisations de jus dilué de jacinthe d'eau améliorant nettement le rendement en récolte de primeurs ou de pleine saison.

Exemple 2:

Expérimentation du jus sur betteraves rouges

Caractéristiques de la culture:

variété: plate d'Egypte améliorée: polygerme

Précédent culture: haricot vert récolte en septembre

Préparation: chisel suivi de herse rotative

Fumure: 150 kg $P_2O_5$, 180 kg $K_2O$ chisel

200 kg/N: 100 kg levée, 100 kg stade 5—6 feuilles

Semis: 14 février sous film plastique

Levée: 3 mars

Démarrage: 3 avril un peut tardif: stade 4—5 feuilles

Peuplement conservé: une plante chaque 10 cm

Ecartement des lignes: 25 cm (peuplement dense)

Binages: 3 avril, 30 avril, 18 mai

Irrigations: 8 mai, 22 mai, 11 juin: apport 180 mm

Traitements expérimentés:

Pulvérisation avec un jus de jacinthe dilué 5 fois:

A=500 l/ha

B=1 000 l/ha

T=1 000 l/ha eau pure

En deux applications:

le 5 avril: au stade 5—6 feuilles

le 30 avril: au début grossissement des racines.

Récoltes échelonnées à partir du 20 mai: récolte de 1 m linéaire chaque 8 jours.

Resultats: Poids des racines commercialisables

| | Rendement en kg par $m^2$ | | |
|---|---|---|---|
| Date | T | A | B |
| 20/5 | 1,5a | 1,8b | 1,9b |
| 28/5 | 1,8a | 1,9a | 2,0a |
| 5/6 | 2,0a | 2,4b | 2,6b |
| 13/6 | 2,4a | 2,7b | 2,8b |
| 20/6 | 2,5a | 2,8b | 3,1c |
| 28/6 | 2,9a | 3,2b | 3,5c |
| 3/7 | 3,1a | 3,6b | 3,9c |

Les lettres a, b, c ont les mêmes significations que dans l'exemple 1.

Les résultats ci-dessus montrent donc que le jus de jacinthe conforme à l'invention favorise de façon significative la croissance des betteraves rouges.

D'autres expérimentations par pulvérisation foliaire effectuées par la demanderesse ont révélé que le jus de jacinthe avait également un effet favorable sur la croissance de plantes telles que plantes herbacées, plantes à racines et tubercules, arbustes et fleurs.

Outre la stimulation de croissance des plantes par pulvérisation foliaire, il a été constaté par la Demanderesse que des jus de jacinthe d'eau de plante entière ou de parties de celles-ci, tels quels ou concentrés, et stabilisés, ont une action de stimulation de la germination de graines.

Par exemple, des tests *in vitro* ont été effectués sur des graines de tomate et de blé. Cette méthode de test est présentée en figures 2a, b, c. Les graines sont mises à germer (figure 2a) dans une boîte de Pétri 2 pendant 48 heures à 24°C dans l'obscurité. Les graines 1a ayant germé (figure 2b) sont mises en place sur un cavalier 3 de papier filtre qui trempe dans un jus 4 de jacinthe d'eau contenu dans un tube à essai 5 fermé par un coton 6 (figure 2c). Ce tube est maintenu à 24°C pendant B jours sous une humidité relative de 70%, avec un éclairage artificiel de 16 h/jour.

Les mesures portent sur la vitesse de germination de la graine 1 et sur la longueur L de la plantule 7 (figure 2d).

Ainsi on a pu tester par exemple les 5 types de jus suivants, obtenus par pressage à froid:

| | |
|---|---|
| Jus n° I | Plante entière |
| Jus n° II | Partie verte non broyée |
| Jus n° III | Partie blanche (racines et tiges) non broyée |
| Jus n° IV | Partie blanche (racines et tiges) broyée |
| Jus n° V | Partie verte broyée. |

Ces jus ont été clarifiés par centrifugation.

L'expérience a montré que tous les jus ainsi élaborés exerçaient une action biostimulatrice, mais que celle-ci pouvait varier quant à sont intensité en fonction de la nature de la plante.

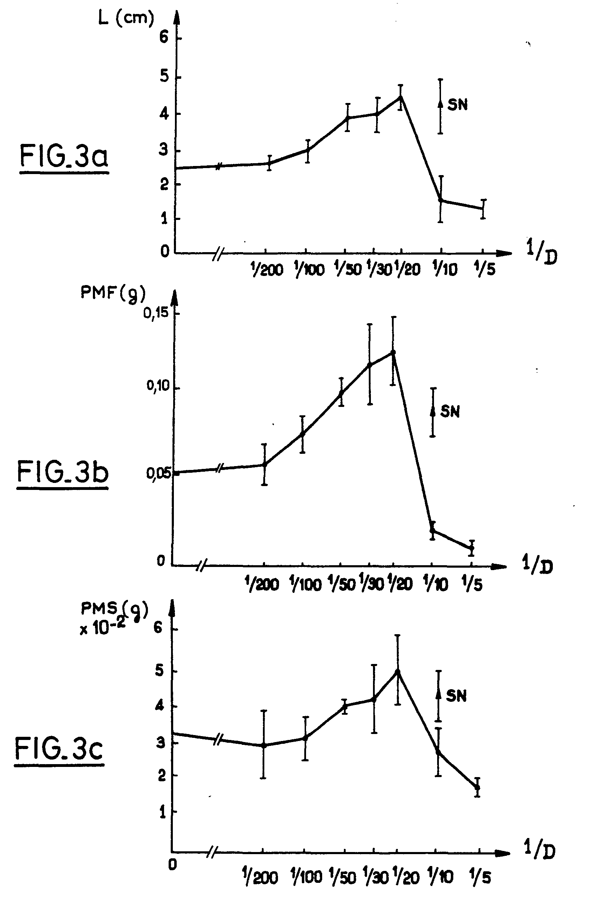

Ainsi aux figures 3a, 3b et 3c des dessins annexés, on a montré à titre d'exemple l'effet du jus n° IV sur la tomate. Sur ces figures les inverses 1/D du taux de dilution D sont portés en abscisses. En ordonnées, on a représenté:

la longueur moyenne de la tige L (figure 3a)

le poids moyen de la matière fraiche PMF (tiges et racines) des jeunes plantes (figure 3b)

le poids moyen de matière sèche PMS des jeunes plantes (figure 3c).

Chaque point indiqué est la moyenne$\pm$écart type de 15 à 20 observations. SN désigne les résultats obtenus en trempant le papier filtre dans une solution nutritive témoin.

Dans cet exemple, quel que soit le critère il apparaît que le jus n° IV dilué 20 fois présente une activité maximale. Des concentrations inférieures sont moins ou pas actives. Des concentrations supérieures deviennent inhibitrices.

Pour les jus I, II, III, l'allure des courbes obtenues à l'égard des plantules de tomates, reste la même. L'effet stimulateur maximal avoisine 80% pour le jus dilué 10 fois. Le jus n° V présente, quant à lui, un effet stimulateur jusqu'à la concentration maximale testée (jus dilué 5 fois).

Cet effet activateur de germination provoqué par le jus de jacinthe d'eau ainsi cultivée, ce jus étant mis en contact avec la graine, est particulièrement intéressant même si les caractéristiques de la plante adulte ne sont pas modifiées.

**Revendications**

1. Procédé pour la culture hydroponique de la jacinthe d'eau, dans lequel on cultive les plantes dans une solution aqueuse nutritive contenant au moins un composé azoté et des éléments tels que P, K, Ca, Mg, S et Fe, dans lequel on forme ledit composé azoté en ajoutant de l'urée à la solution nutritive et caractérisé en ce qu'on ajuste l'apport en urée de façon à maintenir un équilibre sensiblement stable entre l'urée et ses produits de décomposition au contact de la jacinthe et notamment de ses racines, à savoir $NH_4^+$ et $NO_3^-$.

2. Procédé conforme à la revendication 1, caractérisé en ce qu'on ajuste l'apport en urée de façon à maintenir des proportions sensiblement égales en urée, $NH_4^+$ et $NO_3^-$ par rapport à l'azote total de la solution.

3. Procédé conforme à l'une des revendications 1 et 2, caractérisé en ce que la concentration en azote total de la solution est maintenue à une valeur comprise entre 100 et 1 000 ppm.

4. Procédé conforme à l'une des revendications 1 à 3, caractérisé en ce qu'on maintient le pH de la solution à une valeur comprise entre 5 et 7, de préférence 6,5.

5. Procédé conforme à l'une des revendications 1 à 4, caractérisé en ce qu'on ajuste la teneur en Fe de la solution à une valeur comprise entre quelques ppm et quelques dizaines de ppm de façon à enrichir la jacinthe d'eau en xantophylles et carotènes.

6. Jacinthe d'eau obtenue selon le procédé conforme à l'une des revendications 1, caractérisée en ce qu'elle renferme une teneur en matières azotées totales sensiblement comprise entre 35 et 45% de la matière sèche.

7. Jacinthe d'eau conforme à la revendication 6, caractérisée en ce qu'elle renferme entre 500 et 1 500 ppm de xantophylles et entre 20 et 500 ppm de carotènes, par rapport à la matière sèche.

8. Jus extrait de la jacinthe d'eau conforme à l'une des revendications 6, caractérisé en ce qu'il est obtenu par pressage d'au moins une partie de la jacinthe.

9. Jus conforme à la revendication 8, caractérisé en ce qu'il est obtenu par pressage de la partie blanche de la plante.

10. Jus conforme à l'une des revendications 8 ou 9, caractérisé en ce qu'il est obtenu par broyage et pressage d'une partie au moins de la plante.

11. Jus conforme à l'une des revendications 8 à 10, caractérisé en ce qu'il est filtré et stabilisé chimiquement pour éviter toute fermentation.

12. Jus conforme à l'une des revendications 8 à 11, caractérisé en ce qu'il renferme après filtration et avant stabilisation chimique entre 1 et 2% en poids de matière sèche en solution.

13. Jus conforme à l'une des revendications 8 à 12, caractérisé en ce qu'il est concentré pour le stockage avant l'emploi, par évaporation de l'eau.

14. Utilisation du jus de jacinthe d'eau conforme à l'une des revendications 8 à 13, comme bio-stimulant de la croissance des plantes.

15. Utilisation conforme à la revendication 14, caractérisée en ce que le jus de jacinthe est dilué à raison de 5 à 30 litres d'eau pour 1 litre de jus.

16. Utilisation conforme à la revendication 15, caractérisée en ce que le jus stabilisé et dilué de jacinthe est pulvérisé sur les plantes.

17. Utilisation conforme à l'une des revendications 15 à 16, comme bio-stimulant des plantes choisies parmi les suivantes: plantes herbacées, plantes à racines et tubercules, arbustes et fleurs.

18. Utilisation du jus de jacinthe conforme à l'une des revendications 14, 15 ou 17 comme activateur de germination des graines par mise en contact du jus avec les graines.

**Patentansprüche**

1. Verfahren zur Hydrokultur der Wasserhyazinthe, bei welchem die Pflanzen in einer wäßrigen Nährlösung gezogen werden, die mindestens eine Stickstoffverbindung und Elemente wie P, K, Ca, Mg, S und Fe enthält, und bei welchem die genannte Stickstoffverbindung dadurch gebildet wird, daß man der Nährlösung Harnstoff zugibt, dadurch gekennzeichnet, daß man die Harnstoffzugabe so einstellt, daß zwischen dem harnstoff und seinen in Kontakt mit der Hyazinthe und insbesondere mit deren Wurzeln gebildeten Zersetzungsprodukten, u.zw. $NH_4^+$ und und $NO_3^-$, ein im wesentlichen stabiles Gleichgewicht aufrechterhalten wird.

2. Verfahren nach Anspruch 1, dadurch gekennzeichnet, daß man die Harnstoffzugabe so einstellt, daß im wesentlichen gleiche Anteile an Harnstoff, $NH_4^+$ und $NO_3^-$ in bezug auf den gesamten Stickstoff der Lösung aufrechterhalten werden.

3. Verfahren nach Anspruch 1 oder 2, dadurch gekennzeichnet, daß die Gesamtstickstoffkonzentration der Lösung auf einem Wert zwischen 100 und 1 000 ppm gehalten wird.

4. Verfahren nach einem der Ansprüche 1 bis 3, dadurch gekennzeichnet, daß man den pH-Wert der Lösung auf einem Wert zwischen 5 und 7, vorzugsweise auf 6,5, hält.

5. Verfahren nach einem der Ansprüche 1 bis 4, dadurch gekennzeichnet, daß man den Gehalt der Lösung an Fe auf einem Wert zwischen einigen ppm und einigen Zehn ppm hält, um die Wasserhyazinthe mit Xantophyllen und Karotinen anzureichern.

6. Nach dem Verfahren nach Anspruch 1 erhaltene Wasserhyazinthe, dadurch gekennzeichnet, daß sie einen Gesamtgehalt an stickstoffhaltigen Stoffen im wesentlichen zwischen 35 und 45% der Trockensubstanz aufweist.

7. Wasserhyazinthe nach Anspruch 6, dadurch gekennzeichnet, daß sie zwischen 500 und 1 500 ppm Xanthophylle und zwischen 20 und 500 ppm Karotine, bezogen auf die Trockensubstanz, enthält.

8. Aus der Hyazinthe nach Anspruch 6 extrahierter Saft, dadurch gekennzeichnet, daß er durch Pressen mindestens eines Teiles der Hyazinthe erhalten wurde.

9. Saft nach Anspruch 8, dadurch gekennzeichnet, daß er durch Pressen des weißen Teiles der Pflanze erhalten wurde.

10. Saft nach Anspruch 8 oder 9, dadurch gekennzeichnet, daß er durch Zerkleinern und Pressen mindestens eines Teiles der Pflanze erhalten wurde.

11. Saft nach einem der Ansprüche 8 bis 10, dadurch gekennzeichnet, daß er gefiltert und chemisch stabilisiert wurde, um jede Fermentierung zu vermeiden.

12. Saft nach einem der Ansprüche 8 bis 11, dadurch gekennzeichnet, daß er nach dem Filtern und vor dem chemischen Stabilisieren zwischen 1 und 2 Gew.-% an Trockensubstanz in Lösung enthält.

13. Saft nach einem der Ansprüche 8 bis 12, dadurch gekennzeichnet, daß er zwecks Lagerung vor dem Gebrauch durch Verdampfen des Wassers konzentriert wurde.

14. Verwendung des Hyazinthensaftes nach einem der Ansprüche 1 bis 13 als Bio-Stimulans für das Wachstum von Pflanzen.

15. Verwendung nach Anspruch 14, dadurch gekennzeichnet, daß der Hyazinthensaft in einer Menge von 5 bis 30 l Wasser auf 1 l Saft verdünnt wird.

16. Verwendung nach Anspruch 15, dadurch gekennzeichnet, daß der stabilisierte und verdünnte Hyazinthensaft auf die Pflanzen gesprüht wird.

17. Verwendung nach Anspruch 15 oder 16 als Bio-Stimulans für Pflanzen ausgewählt aus der Gruppe bestehend aus krautartigen Pflanzen, Pflanzen mit Wurzeln und Knollen, Sträuchern und Blumen.

18. Verwendung des Hyazinthensaftes nach einem der Ansprüche 14, 15 und 17 als Aktivator für das Ankeimen von Samen durch Inkontaktbringen des Saftes mit den Samen.

**Claims**

1. A process for the hydroponic cultivation of water hyacinth, in which the plants are cultivated in a nutrient aqueous solution containing at least one nitrogen compound and elements such as P, K, Ca, Mg, S and Fe, in which the said nitrogen compound is formed by adding urea to the nutrient solution, and characterized in that the supply of urea is adjusted so as to maintain a substantially stable equilibrium between the urea and its decomposition products in contact with the hyacinth, and more particularly its roots, i.e. $NH_4^+$ and $NO_3^-$.

2. A process according to claim 1, characterized in that the supply of urea is so adjusted as to maintain substantially equal proportions of urea, $NH_4^+$ and $NO_3^-$ in relation to the total nitrogen of the solution.

3. A process according to one of claims 1 and 2, characterized in that the total nitrogen concentration of the solution is kept at a value between 100 and 1 000 ppm.

4. A process according to one of claims 1 to 3, characterized in that the pH of the solution is kept at a value of between 5 and 7, preferably 6.5.

5. A process according to one of claims 1 to 4, characterized in that the Fe content of the solution is adjusted to a value of between a few ppm and some tens of ppm so as to enrich the water hyacinth in respect of xanthophylls and carotenes.

6. A water hyacinth, obtained by the process according to claim 1, characterized in that it has a total nitrogen substance content substantially between 35% and 45% of the dry substance.

7. A water hyacinth according to claim 6, characterized in that it contains between 500 and 1 500 ppm of xanthophylls and between 20 and 500 ppm of carotenes with respect to dry substance.

8. Juice extracted from the water hyacinth according to claim 6, characterized in that it is produced by pressing at least some of the hyacinth.

9. Juice according to claim 8, characterized in that it is produced by pressing the white part of the plant.

10. Juice according to one of claims 8 and 9, characterized in that it is produced by crushing and pressing at least part of the plant.

11. Juice according to one of claims 8 to 10, characterized in that it is filtered and stabilized chemically to avoid any fermentation.

12. Juice according to one of claims 8 to 11, characterized in that after filtration and before chemical stabilization it contains between 1 and 2% by weight of dry substance in solution.

13. Juice according to one of claims 8 to 12, characterized in that it is concentrated for storage before use, by evaporation of the water.

14. Use of water hyacinth juice according to one of claims 8 to 13, as a bio-stimulant for plant growth.

15. Use according to claim 14, characterized in that the hyacinth juice is diluted in the proportion of 5 to 30 litres of water to 1 litre of juice.

16. Use according to claim 15, characterized in that the stabilized and diluted hyacinth juice is sprayed on to plants.

17. Use according to one of claims 15 and 16, as a bio-stimulant for plants comprising the following classes: herbaceous plants, root and tuber plants, shrubs and flowers.

18. Use of the hyacinth juice according to one of claims 14, 15 and 17, as a seed germination activator by bringing the juice into contact with the seed.

FIG_1

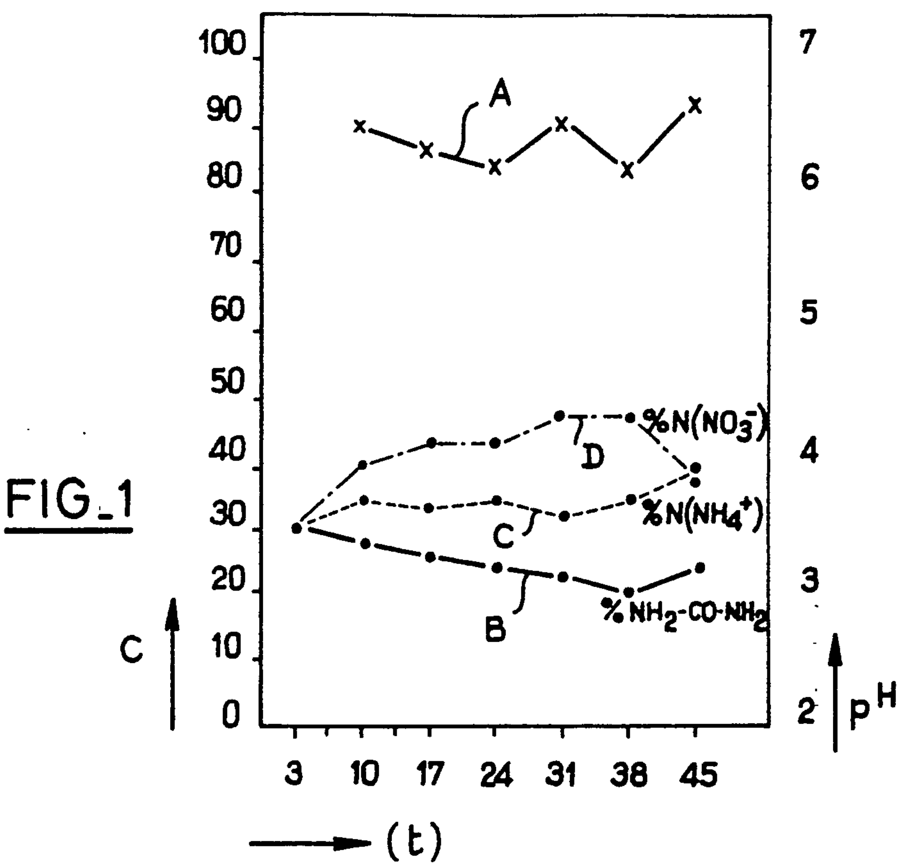


FIG_2a

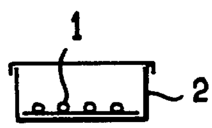


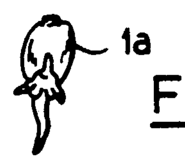


FIG_2b

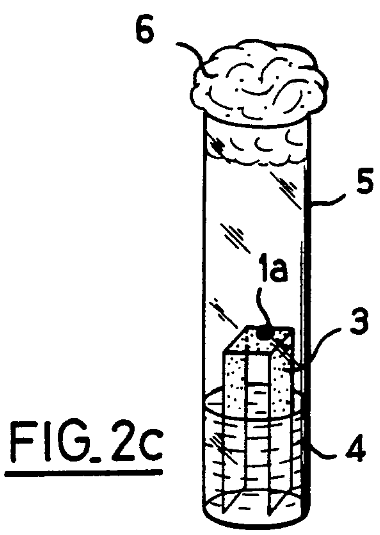


FIG_2c

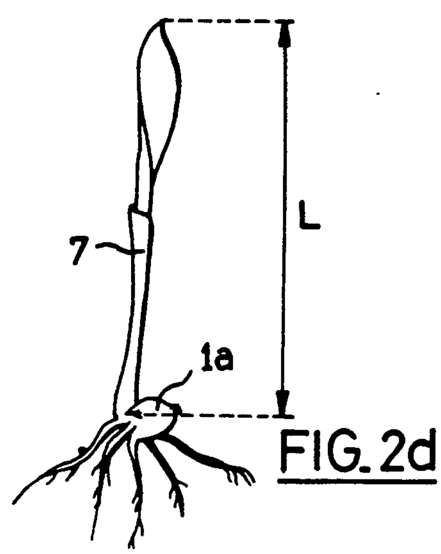


FIG_2d

FIG.3a

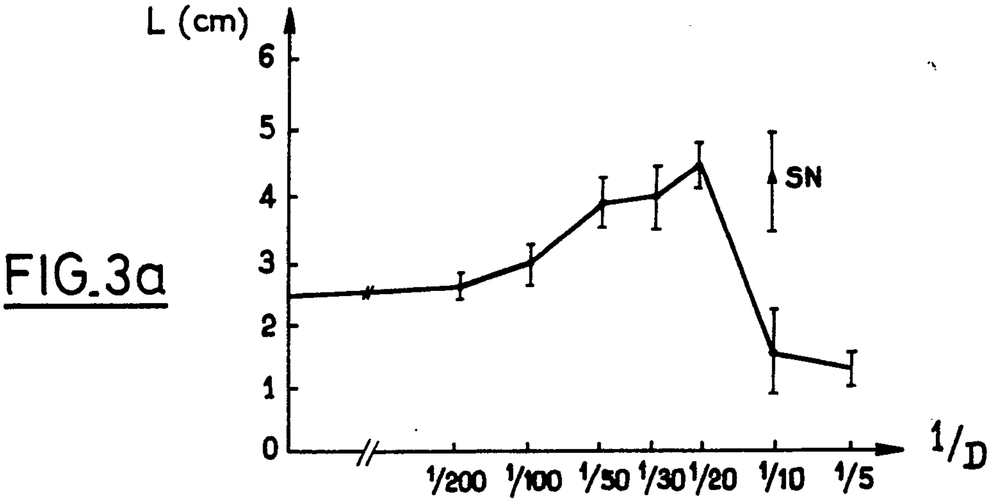


FIG.3b

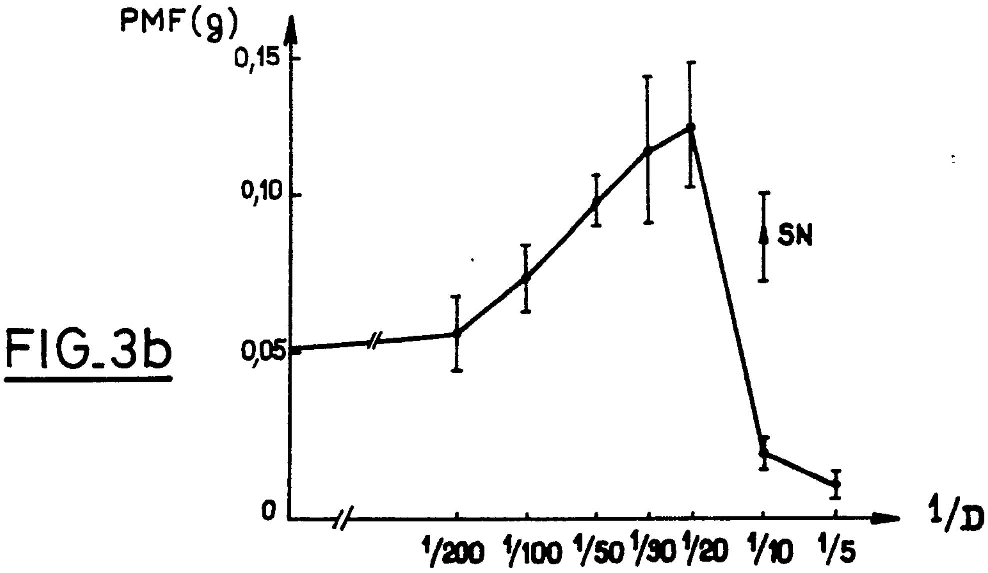


FIG.3c